# EUROPÄISCHE PATENTANMELDUNG

(11) **EP 1 127 834 A1**
(43) Veröffentlichungstag der Anmeldung: **29.08.2001**
(21) Anmeldenummer: 01101509.6
(22) Anmeldetag: 24.01.2001
(51) Int. Cl.: B67B 3/064, B65G 47/14

(54) **Sortiervorrichtung für becherförmige Gegenstände**

(30) Priorität: 28.01.2000 DE 10003625
(71) Anmelder: Weidenmüller, Ralf, 79576 Weil am Rhein (DE)
(72) Erfinder: Weidenmüller, Ralf, 79576 Weil am Rhein (DE)
(74) Vertreter: Rapp, Bertram, Dr.

(57) **Zusammenfassung**

Die Aufgabe, eine Sortiervorrichtung für becherförmige Gegenstände so weiterzubilden, daß auf einfache und billige Weise ein zuverlässiges Aussortieren falsch orientierter Gegenstände ermöglicht wird, wird dadurch gelöst, daß die Rinne (5) zumindest teilweise luftdurchlässig ausgebildet ist und die Auswurfeinrichtung eine unterhalb der Rinne (5) angeordnete und zur Rinne (5) hin wirkende Druckluftdüse (6) ist, welche jeden Gegenstand (1) mit Druckluft beaufschlagt, wodurch die Gegenstände (1'), deren Deckfläche (4) zur Rinne (5) orientiert ist, angesaugt werden und in der Rinne (5) verbleiben und die Gegenstände (1), deren Öffnung (3) zur Rinne (5) orientiert ist, aus der Rinne (5) geblasen werden.

## Beschreibung

Die Erfindung betrifft eine Sortiervorrichtung für identische becherförmige Gegenstände nach dem Oberbegriff des Anspruchs 1.

Bei derartigen Gegenständen handelt es sich beispielsweise um Flaschenverschlüsse aus Kunststoff mit einer Zylinderwand, einer Deckfläche und einer dieser Deckfläche gegenüberliegenden Öffnung. Diese Flaschenverschlüsse kommen von einer Spritzgußmaschine und werden einer Abfüllmaschine zugeführt. Damit die Abfüllmaschine die Verschlüsse in der richtigen Orientierung, also mit der Öffnung zur Flasche hin, auf die Flasche aufsetzen kann, müssen die Verschlüsse vorher derart sortiert werden, daß alle Öffnungen in die gleiche Richtung weisen.

Hierzu ist es bekannt, die Verschlüsse auf einem Band oder in einer Rinne aufeinanderfolgend anzuordnen, wobei etwa die Hälfte der Verschlüsse mit der Öffnung nach unten und die andere Hälfte mit der Öffnung nach oben zeigt. Anschließend wird die Orientierung jedes Verschlusses mit Hilfe eines Sensors geprüft und die falsch orientierten Verschlüsse - beispielsweise diejenigen mit der Öffnung nach unten - werden mit Hilfe einer Auswurfeinrichtung entfernt. Die hierzu notwendigen Sensoren können beispielsweise mechanische Sensoren, kapazitive Sensoren oder optische Sensoren sein. Die Sensoren steuern eine Elektronik an, die ihrerseits die Auswurfeinrichtung betätigt.

Nachteilig bei diesen Vorrichtungen ist der relativ komplizierte Aufbau, der insbesondere durch die Steuerungselektronik, die Sensoreinrichtungen und die Auswurfeinrichtung bedingt ist. Die Vorrichtungen sind teuer und aufwendig in der Wartung. Die Sensoren sind fehleranfällig und müssen regelmäßig ausgetauscht oder gereinigt werden. Ferner sind die bekannten Vorrichtungen langsam und können an hohe Produktionsgeschwindigkeiten nicht angepaßt werden.

Es besteht daher die Aufgabe, eine Sortiervorrichtung für becherförmige Gegenstände so weiterzubilden, daß auf einfache und billige Weise ein zuverlässiges Aussortieren falsch orientierter Gegenstände ermöglicht wird.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher beschrieben, welche zeigen:
- **Figur 1**: einen seitlichen Schnitt einer erfindungsgemäßen Vorrichtung mit offener Deckelzuführung;
- **Figur 2**: einen seitlichen Schnitt gemäß Figur 1 mit geschlossener Deckelzuführung;
- **Figur 3**: eine perspektivische Darstellung eines zu sortierenden Gegenstandes;
- **Figur 4**: eine perspektivische Darstellung der Vorrichtung während des Betriebs;
- **Figur 5**: eine Seitenansicht der Vorrichtung aus Figur 2 entlang der Pfeilrichtung A;
- **Figur 6**: eine perspektivische Darstellung der in den Figuren 2 und 3 dargestellten Vorrichtung aus einem anderen Blickwinkel und mit zusätzlicher Darstellung eines Deckelaufsatzes;
- **Figur 7**: eine Draufsicht auf die Austragsvorrichtung.

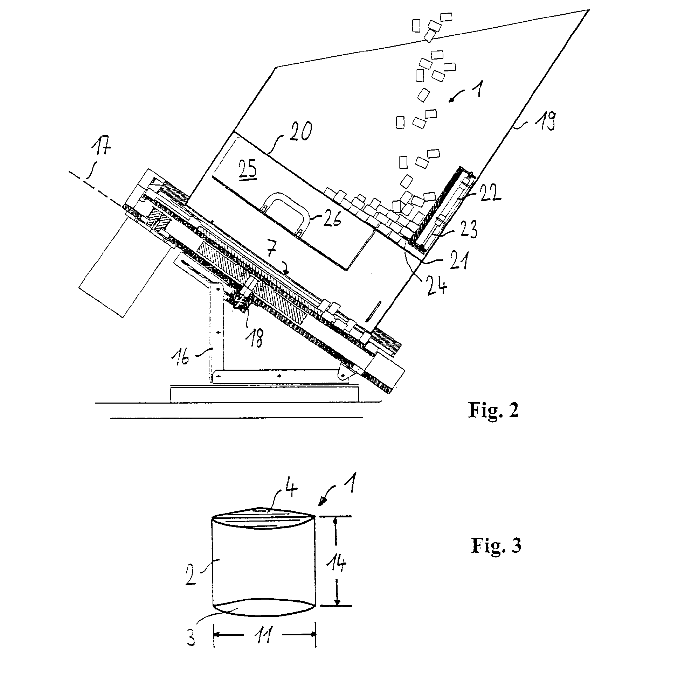

Bei den zu sortierenden Gegenständen kann es sich um beliebige becherförmige Gegenstände 1 handeln, wie sie in Figur 3 dargestellt sind. Die Gegenstände weisen eine Zylinderwand 2 und eine Deckfläche 4 auf. Anstelle der gegenüberliegenden Deckfläche des Zylinders befindet sich lediglich eine Öffnung 3, wodurch die Becherform entsteht. Bei den becherförmigen Gegenständen handelt es sich beispielsweise um Flaschenverschlüsse. Diese weisen in der Regel außen eine zusätzliche Profilierung zur leichteren Greifbarkeit auf und innen ein Gewinde (beides nicht dargestellt). Dennoch handelt es sich der Grundform nach um becherförmige Gegenstände im Sinne dieser Beschreibung und der Ansprüche.

Die Höhe des Gegenstandes 1 ist mit der Bezugszahl 14 bezeichnet, sein Durchmesser mit der Bezugszahl 11. Die Bezugszahl 1 wird im folgenden für alle identischen Gegenstände benutzt, während die Bezugszahl 1' die korrekt orientierten Gegenstände nach Durchführung der Sortierung bezeichnet.

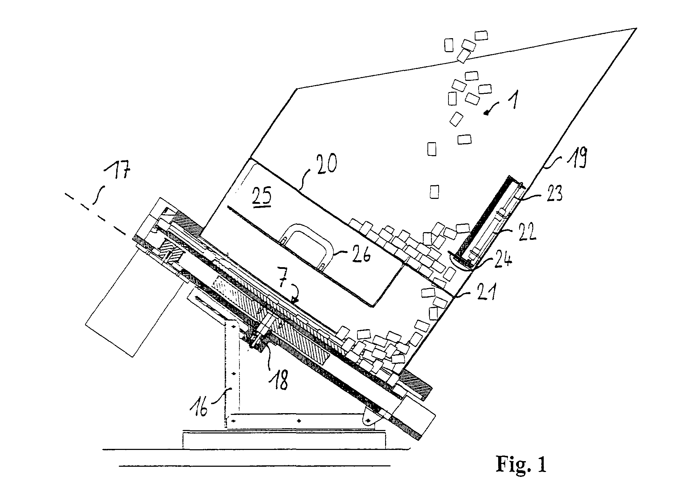

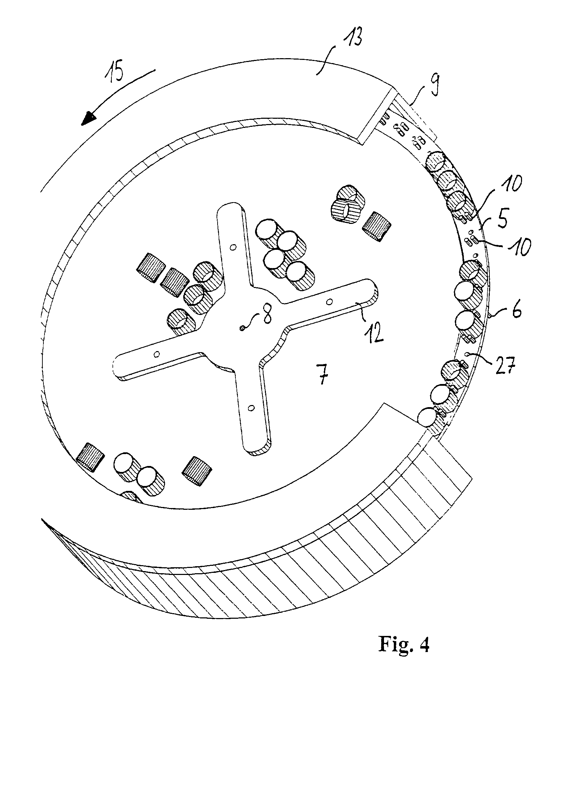

Die Figuren 1 und 2 zeigen ein Ausführungsbeispiel der erfindungsgemäßen Vorrichtung im teilweisen Längsschnitt. Die Vorrichtung weist eine Basis 16 auf, die im dargestellten Ausführungsbeispiel aus einem Winkel besteht, wodurch die Arbeitsebene der Vorrichtung gegenüber der Horizontalen geneigt angeordnet ist. In dieser Arbeitsebene 17 liegt auch die unter Bezugnahme auf die Figuren 4 bis 6 näher beschriebene Scheibe 7. Den Figuren 1 und 2 ist insbesondere der Antrieb 18 dieser sich drehenden Scheibe 7 zu entnehmen. Die eigentliche Sortierung der Gegenstände 1 erfolgt im Bereich der Scheibe 7 und wird weiter unten beschrieben. Die Figuren 1 und 2 zeigen vor allem die Zuführung der zu sortierenden Gegenstände zu dieser Scheibe 7.

Diese Gegenstände 1 werden von oben in ein Trichtergehäuse 19 geschüttet und kommen, wie in Figur 2 dargestellt, auf einem Zwischenboden 20 zu liegen. Die Hochachse dieses Trichtergehäuses 19 steht senkrecht auf der Arbeitsebene 17 und der Zwischenboden 20 wiederum senkrecht auf den Wänden des Trichtergehäuses 19, so daß sich ein tiefster Punkt ergibt. Im Bereich dieses tiefsten Punktes weist der Zwischenboden 20 eine Öffnung 21 auf, die deutlich größer ist als die Gegenstände 1, so daß die Gegenstände bei freigegebener Öffnung 21 (Figur 1) ohne weiteres durch diese hindurch fallen können. Diese Öffnung 21 ist mit Hilfe eines Pneumatikzylinders 22 verschließbar. Der Pneumatikzylinder 22 ist an der Wandung des Trichtergehäuses 19 befestigt. An der Kolbenstange 23 des Pneumatikzylinders ist wiederum eine Gummilippe 24 angeordnet, die parallel zum Zwischenboden 20 verläuft. Die Abmessungen der Gummilippe 24 entsprechen im wesentlichen denen der Öffnung 21, können jedoch auch größer oder geringer sein, vorausgesetzt, daß die Gegenstände 1 in der Schließstellung (Figur 2) nicht durch die Öffnung 21 fallen.

Die durch den Pneumatikzylinder 22 und die die Öffnung 21 verschließende Gummilippe 24 gebildete Deckelzuführung dient dazu, die eigentliche Sortiervorrichtung, deren Kernstück die Scheibe 7 ist, schrittweise mit neuen, zu sortierenden Gegenständen 1 zu versorgen.

In der Seitenwandung des Trichtergehäuses 19 ist außerdem eine Aussparung 25 eingebracht, die mit Hilfe eines Deckels verschließbar ist. Dieser Deckel weißt einen Griff 26 auf. Entfernt man den Deckel, so kann man über die Aussparung 25 an der Scheibe 7 oder den darauf liegenden Gegenständen 1 manipulieren.

Figur 4 zeigt ein bevorzugtes Ausführungsbeispiel der Scheibenanordnung der erfindungsgemäßen Vorrichtung schematisch in perspektivischer Darstellung. In dieser Ausführungsform ist eine Scheibe 7 schräg zu einer (nicht dargestellten) vertikalen Ebene orientiert, wobei der Winkel zwischen der Fläche der Scheibe 7 und der vertikalen Ebene zwischen 30° und 60° liegt. Dieser Winkel wird durch die Winkelstellung der Basis 16 eingestellt. Die Scheibe 7 ist um ihren Mittelpunkt 8 drehbar ausgebildet, wobei die Drehachse (nicht dargestellt) senkrecht auf der Scheibe 7 steht. Entlang des Randes der Scheibe 7 und auf ihrer Oberseite verläuft eine Rinne 5, deren Tiefe einen geringen Bruchteil der Höhe 14 der Gegenstände 1 entspricht.

Die Rinne 5 weist im regelmäßigen Abständen Mitnehmer 10 auf, wobei jeder Mitnehmer 10 als Paar radial (bezüglich des Radius der Scheibe 7) nebeneinander angeordneter Stahlstifte ausgebildet ist. Der Abstand zweier Stahlstifte innerhalb eines Paares ist deutlich geringer als der Durchmesser 11 der Gegenstände 1 und so bemessen, daß die Gegenstände 1 auf beiden Stahlstiften eines Paares aufliegen. Der Abstand benachbarter Paare ist etwas größer als der Durchmesser 11 der Gegenstände 1, so daß zwischen benachbarten Paaren jeweils ein Gegenstand 1 Platz finden kann.

Um die Scheibe 7 herum ist ein zylinderförmiges Gehäuse 9 angeordnet. Die Innenseite dieses Gehäuses 9 verläuft unmittelbar, also mit geringem Spiel, entlang des Randes der Scheibe 7 mit der Rinne 5. Hierdurch kann die Rinne 5 auch nur einseitig, also zur Scheibenmitte hin begrenzt sein, während die äußere Begrenzung der Rinne 5 durch die Innenseite des Gehäuses 9 gebildet wird.

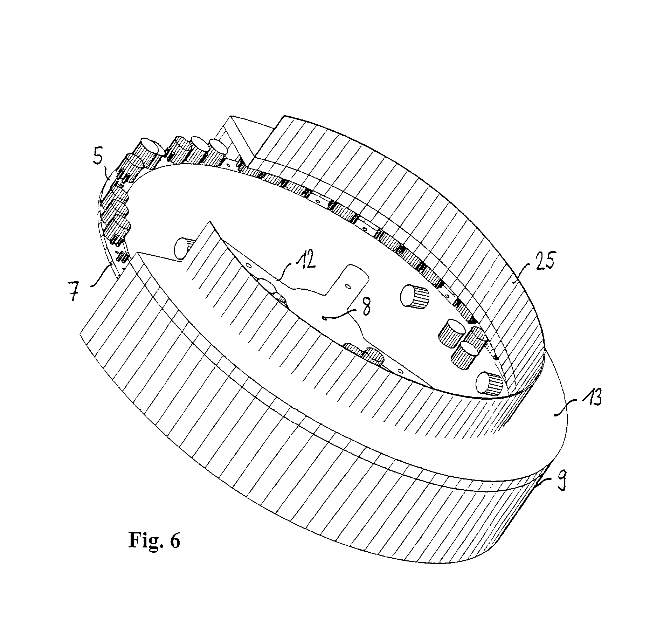

Auf der Oberseite des Gehäuses 9 befindet sich ein Deckelring 13, der sich vom oberen Rand des zylinderförmigen Gehäuses 9 nach innen erstreckt und auf diese Weise eine Öffnung bildet. Der Abstand zwischen der Oberseite der Scheibe 7 und der Unterseite des Deckelringes 13 ist geringer als der Durchmesser 11 der Gegenstände, aber größer als ihre Höhe 14. Auf diese Weise können die Gegenstände 1 von der Innenseite der Scheibe 7 her nur unter den Deckelring 13 gleiten, wenn sie entweder auf der Deckfläche 4 oder auf der Öffnung 3 stehen, nicht aber wenn sie auf der Zylinderwand 2 liegen. Dies ist besonders gut in Figur 6 erkennbar. Ebenfalls in Figur 6 dargestellt ist ein weiterer Gehäuseaufsatz 25 oberhalb des Deckelrings 13, der die Öffnung zum Einfüllen der Gegenstände 1 definiert.

In der Mitte der Scheibe 7 befindet sich eine kreuzförmige Verteilvorrichtung 12 für die Gegenstände 1. Diese Verteilvorrichtung 12 ist fest auf der Scheibe 7 befestigt und dreht sich mit der Scheibe 7 um deren Mittelpunkt 8.

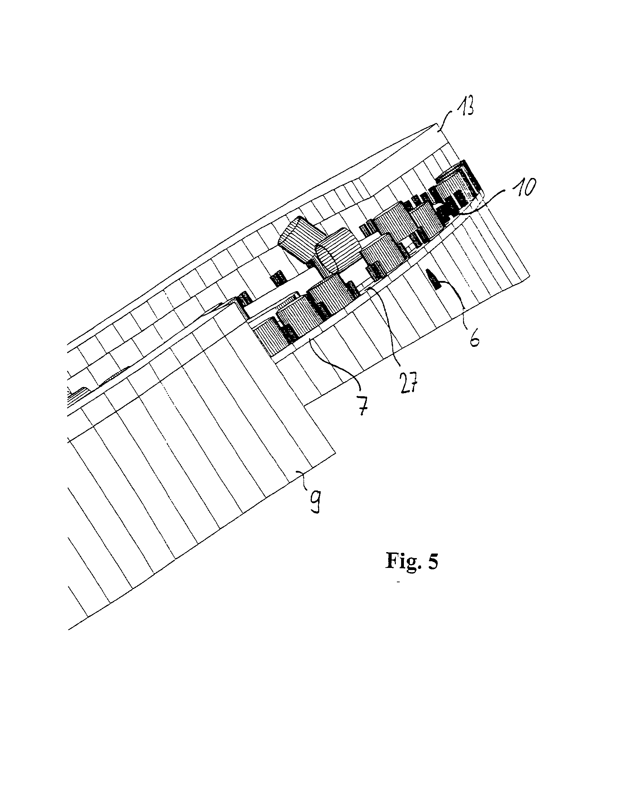

Wie aus Figur 4 erkennbar ist, weist der Boden der Rinne 5 jeweils in der Mitte zwischen zwei benachbarten Paaren von Mitnehmern 10 eine Öffnung 27 auf. Wie aus Figur 5 ersichtlich ist, befindet sich ortsfest zum Gehäuse 9 an einer Stelle unterhalb der Rinne 5 eine Druckluftdüse 6 mit nach oben, also zur Rinne 5 hin weisender Strahlrichtung. Bezogen auf die Drehrichtung 15 der Scheibe 7 befindet sich die Druckluftdüse 6 im Bereich des sich nach oben drehenden Randes der Scheibe 7. Die Druckluftdüse 6 erzeugt einen kontinuierlichen, nach oben gerichteten Druckluftstrom, der dann durch die Öffnungen 27 in der Rinne 5 trifft, wenn sich gerade eine Öffnung 27 oberhalb der Druckluftdüse 6 befindet.

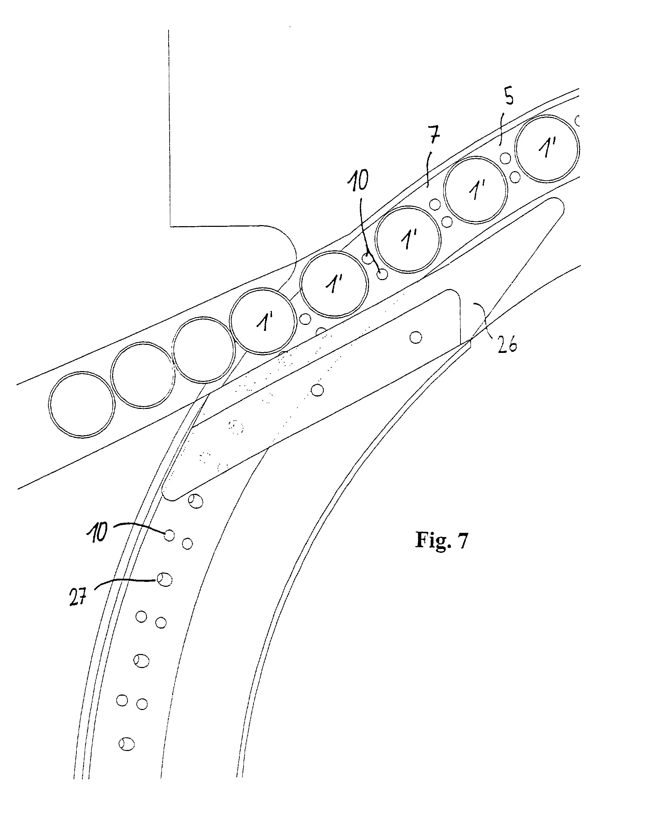

Schließlich weist die Sortiervorrichtung eine in Figur 7 dargestellte Austragsvorrichtung für die sortierten Gegenstände 1' auf. Diese Austragsvorrichtung befindet sich in Figur 4 hinter der Oberseite des Deckelrings 13. Die Austragsvorrichtung besteht aus einem Rechen 26, der die Rinne 5 übergreift und in einem Winkel von etwa 15° zur Bewegungsrichtung der Rinne 5 angeordnet ist. Der Rechen 26 weist Aussparungen für die Mitnehmer 10 auf. Diese können den Rechen 26 also ungehindert durchqueren, während die größeren, von den Mitnehmern 10 geführten Gegenstände 1' von dem Rechen 26 aus der Rinne 5 geführt und anschließend beispielsweise einer Abfüllvorrichtung zugeführt werden.

Die Vorrichtung funktioniert wie folgt.

Die Gegenstände 1, welche beispielsweise aus einer Produktionsmaschine kommen, werden der erfindungsgemäßen Vorrichtung von oben durch Schütten zugeführt, wie es in den Figuren 1 und 2 dargestellt ist. Die Gegenstände 1 landen auf dem Zwischenboden 2 und rutschen zu dessen tiefstem Punkt, also in Richtung der Öffnung 21. Falls diese Öffnung 21 durch die Gummilippe 24 verschlossen ist, bleiben die Gegenstände 1 zunächst dort liegen. sobald die Gummilippe 21 durch Betätigung des Pneumatikzylinders 22 die Öffnung 21 freigibt, fallen die Gegenstände 1 nach unten in den Bereich der Scheibe 7.

Sie treffen auf die Scheibe 7 etwa im Bereich der Verteilvorrichtung 12 auf und fallen, rollen oder rutschen anschließend auf der Oberfläche der sich in Drehrichtung 15 um ihren Mittelpunkt 8 drehenden Scheibe 7 nach unten. Die mit ihrer Zylinderwand 2 auf der Scheibe 7 aufliegenden Gegenstände 1 werden von dem Deckelring 13 zurückgehalten, während die entweder mit ihrer Deckfläche 4 oder mit ihrer Öffnung 3 auf der Scheibe 7 liegenden Gegenstände 1 unter den Deckelring 13 gleiten und einen Platz in der Rinne 5 zwischen zwei benachbarten Mitnehmern 10 finden. Da sich die Scheibe 7 kontinuierlich dreht, werden auch immer neue Plätze für die Gegenstände 1 angeboten. Die Gegenstände 1 sind anschließend in der Rinne 5 statistisch verteilt. Im statistischen Mittel zeigt bei 50% der Gegenstände 1 die Öffnung 3 nach oben, während bei weiteren 50% die Deckfläche 4 nach oben zeigt.

Anschließend werden die Gegenstände 1 in der Rinne 5 auf der rotierenden Scheibe 7 nach oben in den Bereich der Druckluftdüse 6 geführt, die einen kontinuierlichen Luftstrom in Richtung der Rinne 5 ausstrahlt. Der Luftstrom der Druckluftdüse 6 dringt dann durch die Öffnung unterhalb eines Gegenstandes 1. Ist der Gegenstand 1 mit seiner Öffnung 3 nach unten und mit seiner Deckfläche 4 nach oben orientiert, dringt der Luftstrom in den Hohlraum des Gegenstandes 1 ein, erzeugt einen Überdruck und bläst den Gegenstand 1 aus der Rinne 5. Die genaue Richtung des Druckluftstromes und die Geometrie der Scheibe 7 sind so gewählt, daß dieser ausgeblasene Gegenstand 1 wieder in der Mitte der Scheibe 7 im Bereich der Verteilvorrichtung 12 landet, erneut nach unten rutscht und wiederum der Rinne 5 zugeführt wird.

Trifft der Luftstrom aus der Druckluftdüse 6 dagegen auf einen Gegenstand 1', dessen Öffnung 3 nach oben und dessen Deckfläche 4 nach unten (zur Rinne 5 hin) orientiert ist, tritt die Druckluft seitlich der Deckfläche 4 aus, es entsteht eine sehr hohe Strömungsgeschwindigkeit und damit - verglichen mit Athmosphärendruck - ein Unterdruck, durch den der Gegenstand 1' zur Rinne 5 hin gezogen wird, also in der Rinne 5 verbleibt.

Nach Passieren der Druckluftdüse 8 weist die Rinne 5 also nur noch Gegenstände 1' mit korrekter Orientierung (Öffnung 3 nach oben, Deckfläche 4 nach unten) auf, die dann weiter transportiert und der in Figur 7 dargestellten Austragsvorrichtung zugeführt werden. Die Rinne 5 ist also am tiefsten Punkt der Scheibe 7 wieder leer und aufnahmefähig für neue Gegenstände 1.

Die aussortierten Gegenstände 1, die wieder der Scheibe 7 zugeführt werden, haben beim nächsten Durchlauf eine erneute 50 : 50-Wahrscheinlichkeit, in der korrekten Orientierung in der Rinne zu liegen. Im Ergebnis weist die Rinne 5 nach Passieren der Druckluftdüse 8 immer etwa 50% korrekt orientierter Gegenstände 1 auf.

Mit der beschriebenen Vorrichtung läßt sich der Sortiervorgang gänzlich ohne Sensoren durchführen, da durch Ausnützen des Bernoulli-Effektes die Druckluftdüse 6 quasi gleichzeitig die Funktion des Sensors übernimmt. Besonders vorteilhaft bei der Zuführung der Gegenstände 1 zu der Scheibe 7 ist die Anordnung aus Zwischenboden 20 mit Öffnung 21 und Gummilippe 24. Durch Verwendung einer Gummilippe 24, deren Abmessungen im wesentlichen den Abmessungen der Öffnung 21 entsprechen, wird sichergestellt, daß beim Verschließen der Öffnung 21 kein Einklemmen der Gegenstände 1 stattfinden kann. Damit wird auch ein nachfolgender Stau der Gegenstände 1 durch deren gegenseitiges Verklemmen im Bereich der Öffnung 21 zuverlässig vermieden. Die Abmessungen der Gummilippe 24 können etwas geringer sein als die der Öffnung 21, solange der verbleibende Spalt nicht groß genug ist um Gegenstände auch bei geschlossener Öffnung 21 hindurch treten zu lassen.

## Patentansprüche

1. Sortiervorrichtung für becherförmige, eine Zylinderwand (2), eine Deckfläche (4) und eine Öffnung (3) aufweisende identische Gegenstände (1, 1') zur Sortierung in einheitlicher Orientierung der Öffnung (3), mit einer Rinne (5), in welcher die zunächst unsortierten Gegenstände (1) aufeinanderfolgend angeordnet sind und einer Auswurfeinrichtung zur Entfernung der Gegenstände (1) mit falscher Orientierung aus der Rinne (5), **dadurch gekennzeichnet**, daß die Rinne (5) zumindest teilweise luftdurchlässig ausgebildet ist und die Auswurfeinrichtung eine unterhalb der Rinne (5) angeordnete und zur Rinne (5) hin wirkende Druckluftdüse (6) ist, welche jeden Gegenstand (1) mit Druckluft beaufschlagt, wodurch die Gegenstände (1'), deren Deckfläche (4) zur Rinne (5) orientiert ist, angesaugt werden und in der Rinne (5) verbleiben und die Gegenstände (1), deren Öffnung (3) zur Rinne (5) orientiert ist, aus der Rinne (5) geblasen werden.

2. Sortiervorrichtung nach Anspruch 1, **dadurch gekennzeichnet, daß** die Rinne (5) entlang des Randes einer runden Scheibe (7) und an deren Oberseite angeordnet ist und die Scheibe (7) schräg zu einer vertikalen Ebene orientiert und um ihren Mittelpunkt (8) drehbar ausgebildet ist.

3. Sortiervorrichtung nach Anspruch 2, **dadurch gekennzeichnet**, daß die Scheibe (7) von einem zylinderförmigen Gehäuse (9) umgeben ist, dessen Innenseite unmittelbar entlang des Randes der Scheibe (7) und der Rinne (5) verläuft.

4. Sortiervorrichtung nach einem der voranstehenden Ansprüche, **dadurch gekennzeichnet**, daß innerhalb der Rinne (5) äquidistant angeordnete Mitnehmer (10) vorgesehen sind wobei der Abstand benachbarter Mitnehmer (10) geringfügig grösser ist als der Aussendurchmesser (11) eines Gegenstands (1).

5. Sortiervorrichtung nach einem der voranstehenden Ansprüche, **dadurch gekennzeichnet**, daß jeder Mitnehmer (10) als Paar radial nebeneinander angeordneter Stifte ausgebildet ist.

6. Sortiervorrichtung nach einem der Ansprüche 2 bis 5, **dadurch gekennzeichnet**, daß in der Mitte der Oberseite der Scheibe (7) eine kreuzförmige Verteilvorrichtung (12) für die Gegenstände (1) angeordnet ist.

7. Sortiervorrichtung nach einem der Ansprüche 4 bis 6, **dadurch gekennzeichnet**, daß das Gehäuse (9) eine Austragsvorrichtung für die sortierten Gegenstände (1') aufweist, mit einem Rechen der die Rinne (5) übergreift und Aussparungen für die Mitnehmer (10) aufweist.

8. Sortiervorrichtung nach einem der Ansprüche 2 bis 7, **dadurch gekennzeichnet**, daß die aus der Rinne (5) geblasenen Gegenstände (1) wieder der Mitte der Oberseite der Scheibe (7) zuführbar sind.

9. Sortiervorrichtung nach einem der Ansprüche 4 bis 8, **dadurch gekennzeichnet**, daß das Gehäuse (9) einen Deckelring (13) aufweist, der sich vom oberen Rand des zylinderförmigen Gehäuses (9) nach innen erstreckt, durch dessen Öffnung die Gegenstände (1) der Sortiervorrichtung zuführbar sind und dessen Abstand von der Scheibe (7) geringer ist als der Durchmesser (11) der Gegenstände (1), aber grösser als deren Höhe (14).

10. Sortiervorrichtung nach einem der Ansprüche 2 bis 9, **dadurch gekennzeichnet**, daß senkrecht auf der durch die Ebene der Scheibe (7) gebildeten Arbeitsebene (17) ein Trichtergehäuse angeordnet ist, in welches die zu sortierenden Gegenstände (1) eingegeben werden.

11. Sortiervorrichtung nach Anspruch 10, **dadurch gekennzeichnet**, daß das Trichtergehäuse (19) einen Zwischenboden (20) aufweist und im Bereich des tiefsten Punktes dieses Zwischenbodens (20) eine Öffnung (21) angeordnet ist, die mit Hilfe einer Gummilippe (24) verschließbar ist, die im wesentlichen die gleichen Abmessungen wie die Öffnung (21) aufweist.

12. Sortiervorrichtung nach Anspruch 11, **dadurch gekennzeichnet**, daß die Gummilippe (24) mit Hilfe eines Pneumatikzylinders (22) zum Verschließen der Öffnung (21) in den Bereich dieser Öffnung (21) verschiebbar ist und zum Öffnen der Öffnung (21) aus dem Bereich dieser Öffnung (21) heraus verschiebbar ist.

13. Sortiervorrichtung nach einem der Ansprüche 10 bis 11, **dadurch gekennzeichnet**, daß das Trichtergehäuse (19) unterhalb des Zwischenbodens (20) eine mit Hilfe eines Deckels verschließbare Gehäuseaussparung (25) aufweist.
